# EUROPEAN PATENT SPECIFICATION

(11) **EP 3 812 314 B1**
(45) Date of publication and mention of the grant of the patent: **13.07.2022**
(21) Application number: 20202862.7
(22) Date of filing: 20.10.2020
(51) Int. Cl.: B65G 17/08, B65G 17/40

(54) **IMPROVED MODULAR CONVEYOR BELT**
VERBESSERTES MODULARES FÖRDERBAND
COURROIE DE CONVOYEUR MODULAIRE AMÉLIORÉE

(30) Priority: 25.10.2019 IT 201900019773
(43) Date of publication of application: 28.04.2021
(73) Proprietor: Dino Brunelli S.A.S. di Giampaolo Brunelli E C., 47122 Forli' (IT)
(72) Inventor: BRUNELLI, Marco, 47121 FORLI' (IT)
(74) Representative: Baldi, Claudio

(56) References cited:
- EP-A1- 0 795 496
- WO-A1-2011/051411
- WO-A2-2014/060841
- US-A- 5 096 053
- US-A- 5 573 106

## Description

The present patent application for industrial invention relates to an improved modular conveyor belt.

The field of reference is the industrial sector, in particular the handling and/or sorting of goods, packaged products, semi-finished products, and the like, from a position "A" to a position "B".

In particular, the invention relates to a modular conveyor belt composed of a sequence of adjacent modules suitable for being mutually connected to define a supporting surface of the conveyor belt.

Modular conveyor belts with modules made of plastics or metal are known.

Said modules preferably consist in (perforated or non-perforated) plates with rectangular planar shape that are maintained in position by means of a plurality of pins between two parallel chains that laterally define the conveyor belt.

More particularly, each module is provided along its opposite sides with annular elements suitable for being engaged by said pins, creating a sort of hinge and therefore allowing a rotation between adjacent modules and a translation of the conveyor belt.

Moreover, each pin is firmly fixed to the two lateral chains at its ends.

Disadvantageously, after assembling the conveyor belt, spacing is created between adjacent modules. In view of the above, dirt, shavings, or dust may penetrate through the gaps during the operation of the machine connected with the conveyor belt.

The presence of residues may create problems for the conveyor belt, such as damage, jamming and failure during motion.

In order to solve these drawbacks, modular conveyor belts with suitably configured modules are disclosed. In such a case, after assembling the conveyor belt, said modules are partially overlapped, eliminating any gaps and avoiding the penetration of residues or dirt through the gaps under the conveyor belt.

Also in such an embodiment of modular conveyor belts, the modules are fixed with pins.

Although it avoids the penetration of dust, the aforementioned solution is impaired by drawbacks and limitations.

In fact, the modules are difficult to disassemble when maintenance operations are to be performed or when damaged modules are to be replaced; moreover, said modules have a higher flexural resistance in transverse direction.

More precisely, in order to disassemble a module of the conveyor belt, the operator must intervene on the entire structure of the conveyor belt, with downtime and additional costs.

US5096053 discloses a conveyor chain assembly comprising multiple rectangular modules that are mutually hinged to form a chain. US5096053 discloses the preamble of claim 1.

WO2011/051411 discloses modular plastic conveyor belts formed of rows of plastic modules that are mutually linked with possibility of rotating.

WO2014060841 discloses a conveyor system comprising a plurality of belt modules in adjacent position connected to connectors, inserts, and/or fixing portions, such for example pins.

EP0795496 and US5573106 disclose conveyor belts comprising systems configured in such a way to prevent an accidental axial movement of a hinging pin that connects two adjacent modules of the conveyor belt.

The purpose of the present invention is to remedy the drawbacks of the prior art by disclosing a modular conveyor belt that is easy to disassemble and maintain, is reliable, safe and easy to make.

These purposes are achieved according to the invention with the characteristics of the appended independent claim 1.

Advantageous embodiments appear from the dependent claims.

The modular conveyor belt according to the invention is defined by claim 1.

For the sake of clarity, the description of the conveyor belt according to the invention continues with reference to the appended drawings, which have a merely illustrative, not limiting value, wherein:
Fig. 1 is a top axonometric view of a module of a modular conveyor belt according to the invention;
Fig. 1A is a bottom axonometric view of a portion of the module of Fig. 1 comprising the end portion;
Fig. 2 is a top axonometric view of the module of Fig. 1 comprising a pin inserted in the second teeth;
Fig. 2A is a bottom axonometric view of a portion of the module of Fig. 2 comprising the plug obtained in one piece with the end of the pin;
Fig. 2B is a bottom axonometric view of a portion of the module of Fig. 2 comprising the housing of the plug coupled with the end of the pin;
Fig. 3 is a top axonometric view of a modular conveyor belt according to the invention comprising three modules of Fig. 1 coupled with three pins;
Fig. 3A is a bottom axonometric view of a portion of the modular conveyor belt of Fig. 3 with a plug of the pin inserted in the end portion and two plugs extracted from said end portion.

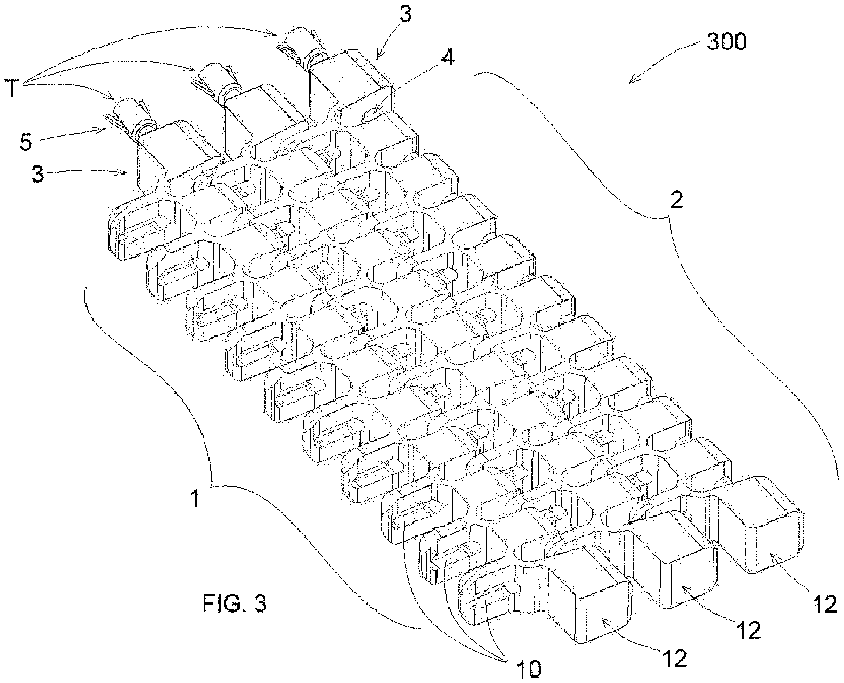

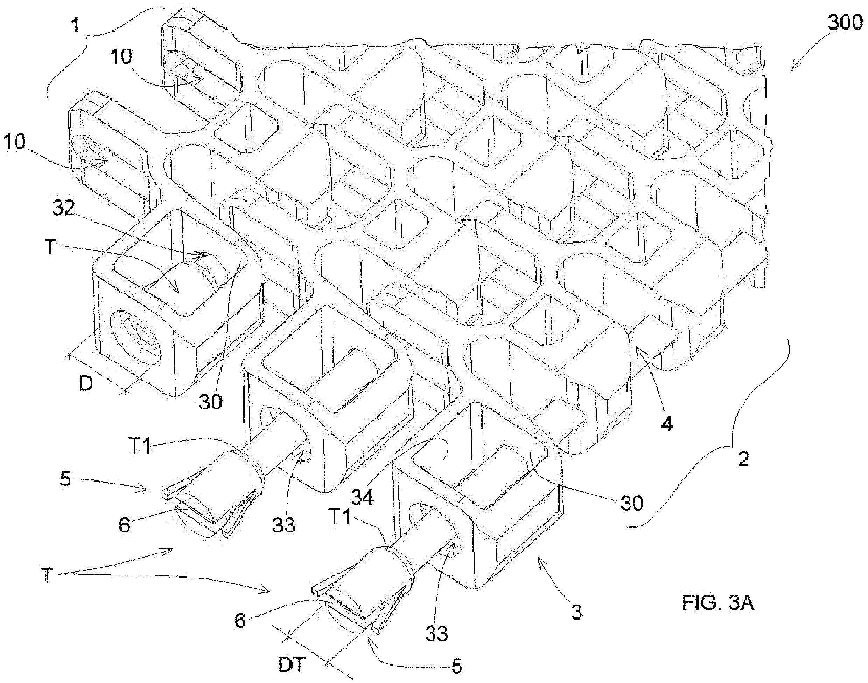

With reference to Figs. 3 and 3A, the modular conveyor belt according to the invention is disclosed, which is generally indicated with reference numeral (300).

The modular conveyor belt (300) comprises a plurality of assemblies (200) in adjacent position, each of them comprising a module (100) and a pin (4) used to connect two modules (100) disposed in adjacent position.

More precisely, each module (100) of the conveyor belt (300) according to the invention comprises first identical teeth (1) in adjacent position and second identical teeth (2) in adjacent position.

In particular, each first tooth (1) comprises a hole (10); all the holes (10) of said first teeth (1) are coaxially aligned along a longitudinal axis (Y1), whereas each second tooth (2) also comprises a hole (20); all the holes of said second teeth (2) are coaxially aligned along a longitudinal axis (Y2) parallel to the longitudinal axis (Y1) of the holes (10) of the first teeth (1).

Preferably, the holes (10) of the first teeth (1) and the holes (20) of the second teeth (2) are slotted.

Moreover, the second teeth (2) are coplanar, opposite and staggered relative to the first teeth (1).

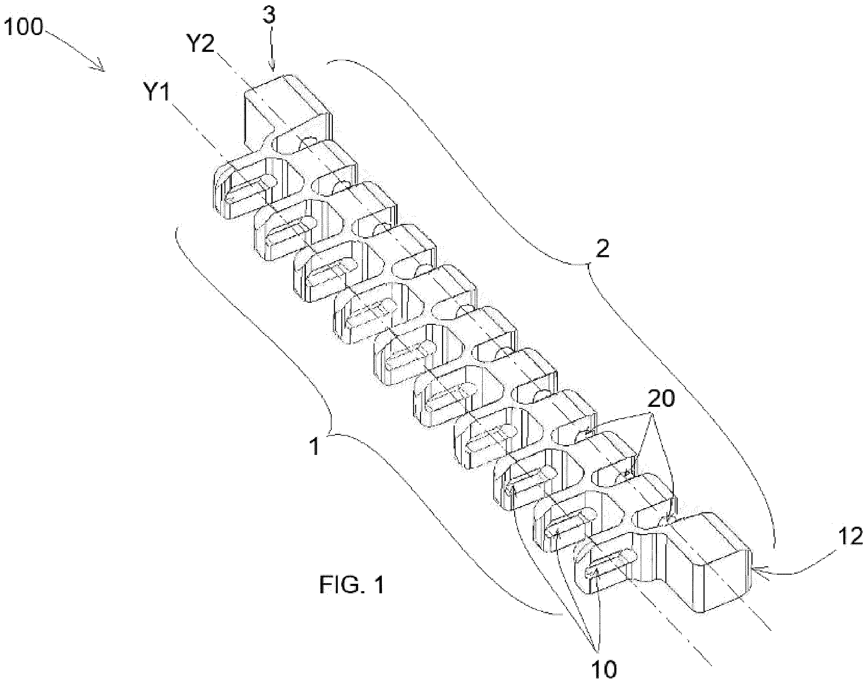

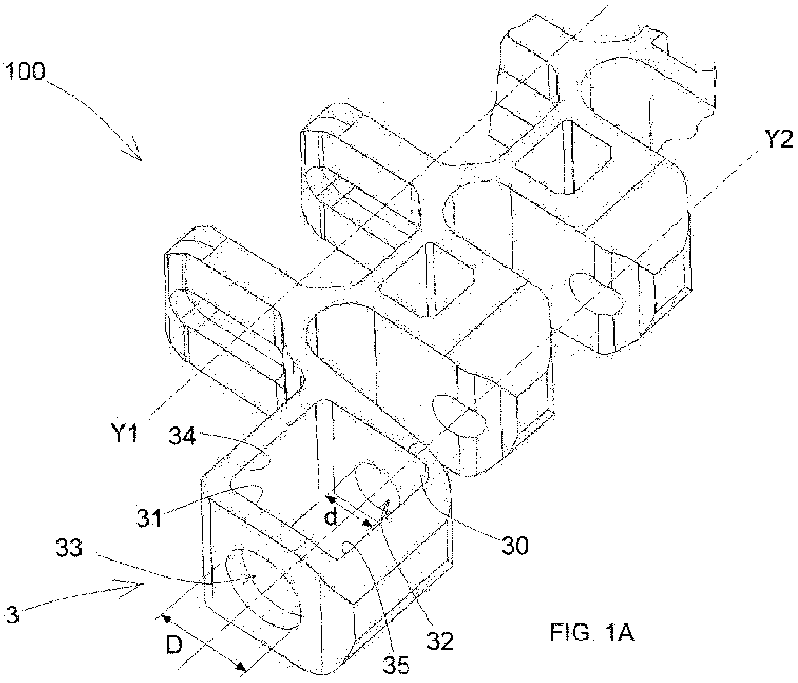

As shown in Fig. 1A, the module (100) comprises an end portion (3) that comprises a first wall (30) disposed in proximal position relative to the first and the second teeth (1, 2), and a second wall (31) parallel to said first wall (30) and disposed in distal position relative to the first and the second teeth (1, 2).

With reference to Fig. 1A, the first wall (30) comprises a hole (32) and the second wall (31) comprises a hole (33).

The two holes (32, 33) of the first wall (30) and of the second wall (31) are coaxial one to another, as well as coaxial to the holes (20) of the second teeth (2).

In particular, the diameter (d) of the hole (32) of the first wall (30) is lower than the diameter (D) of the hole (33) of the second wall (31).

Furthermore, said module (100) comprises a body (12) comprising a blind hole in coaxial position to the holes of the second teeth (2). The second teeth (2) are disposed between the body (12) and the end portion (3).

As shown in Fig. 3A, the pin (4) of an assembly (200) is inserted in the hole (32) of the first wall (30) of the end portion (3) of a module (100), in the holes (20) of the second teeth (2) of the module (100) and in the holes (10) of the first teeth (1) of an adjacent module (100). The travel of the pin (4) ends in the blind hole obtained in the body (12) of the module (100).

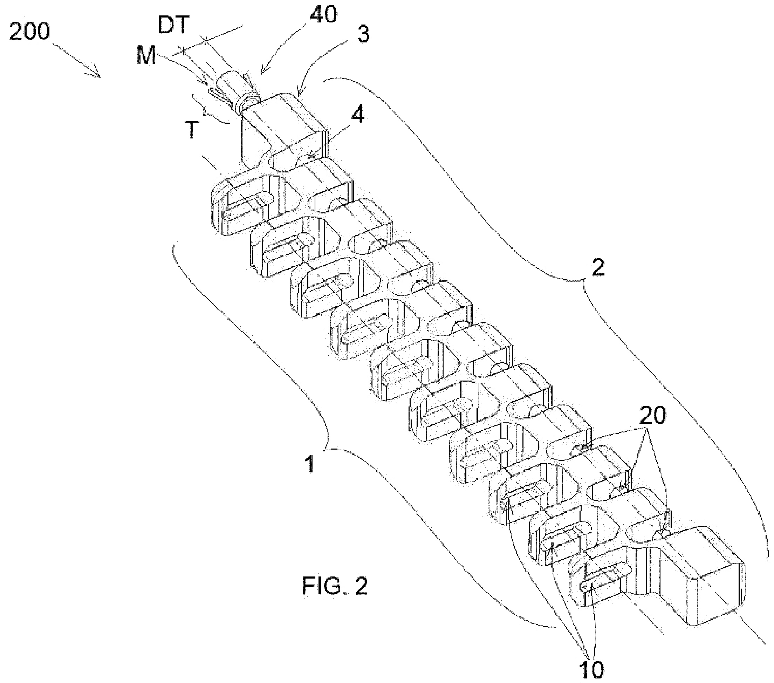

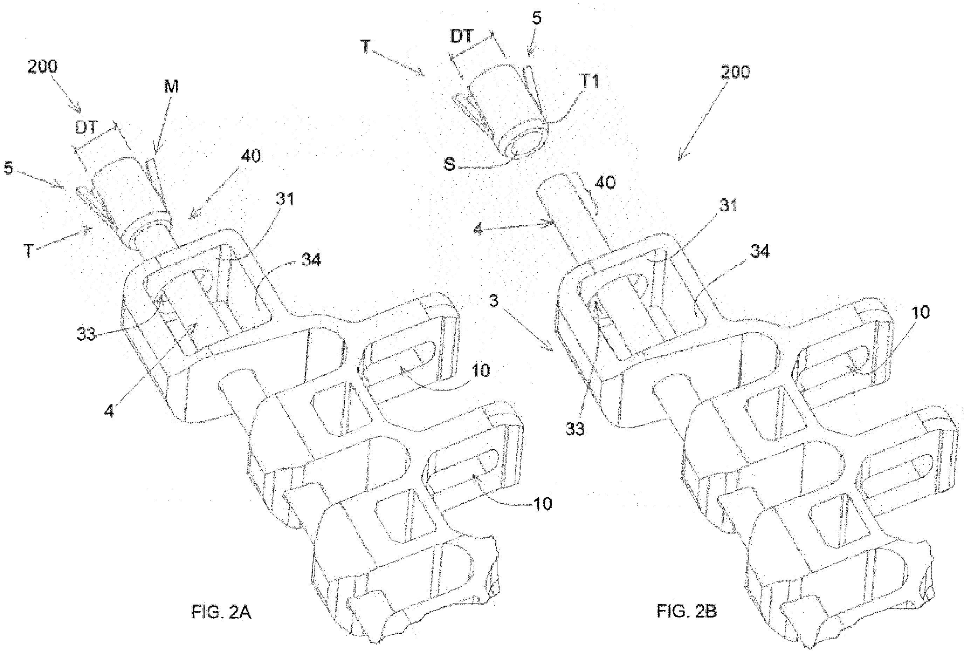

As shown in Fig. 2 and in Fig. 3A, the pin (4) comprises an end (40) with a plug (T) disposed between the first and the second wall (30, 31) of the end portion (3).

More precisely, with reference to Figs. 1A and 2, the diameter (DT) of the plug (T) is higher than the diameter of the hole (32) of the first wall (30) and lower than the diameter of the hole (33) of the second wall (31) in such a way that said plug (T) can pass through the hole (33) of the second wall (31), but not through the hole (32) of the first wall (30).

In order to lock the plug (T) of the pin (4) firmly between the first and the second wall (30, 31) of the end portion (3), and the pin (4) in the holes (32, 33) in coaxial position, the assembly (200) comprises reversible locking means (M) disposed on the plug (T).

The reversible locking means (M) are suitably configured to be in a contracted position, wherein said reversible locking means (M) do not increase the diameter (DT) of the plug (T), in such a way that the plug (T) can pass through the hole (33) of the second wall (31), and in a diverged position, wherein said reversible locking means (M) increase the diameter (DT) of the plug (T), in such a way that the plug (T) cannot come out of the hole (33) of the second wall (31).

As shown in Figs. 2 and 2A, the reversible locking means (M) comprise two elastically flexible tabs (5) obtained on the plug (T).

More precisely, the tabs (5) are disposed in diametrally opposite positions relative to the plug (T).

Although the reversible locking means (M) of the drawings comprise two tabs (5), the objects of the present invention can be advantageously achieved also when said reversible locking means (M) comprise only one tab or more than two tabs (5).

Alternatively, said reversible locking means (M) may also comprise expansion balls obtained around the plug or may comprise a screw, an insert, a transverse plug and the like.

With reference to Figs. 2B and 3A, said plug (T) comprises a base portion (T1) with tapered configuration and increasing section from the base to the head of the plug (T) in order to facilitate the penetration of the plug (T) in the hole (33) of the second wall (31) when said reversible locking means (M) are in retracted position.

Moreover, with reference to Fig. 3A, the plug (T) comprises a central notch (6) obtained along an axis that connects the two tabs (5), which facilitates the bending of the tabs (5) during the penetration of the plug (T) in the hole (33) of the second wall (31) of the end portion (3).

As shown in Fig. 1A, the end portion (3) of each module (100) comprises two lateral walls (34, 35) disposed in parallel position and connected to the first and the second wall (30, 31) in orthogonal direction.

More precisely, said lateral walls (34, 35) and said first and second wall (30, 31) define a box body.

The presence of said box body allows for easily inspecting the plug (T), and at the same time allows for easily accessing the tabs (5) of the plug (T) of the pin (4) in such a way to compress the two tabs (5) in the contracted position and remove said pin (4).

After removing the pin (4), the module (100) may be replaced or maintained rapidly and easily.

As shown in Fig. 2A, the plug (T) can be obtained in one piece with the end (40) of the pin (4), or can be coupled with the end (40) of said pin (4), as shown in Fig. 2B.

More precisely, as shown in Fig. 2B, the plug (T) comprises a housing (S) coupled with the end (40) of the pin (4) by means of pressing.

Alternatively, the plug (T) can be coupled with the end of the pin (4) by means of a threaded coupling, or by means of bayonet-coupling means obtained in the housing (S) of the plug (T) and in said end (40) of the pin (4).

The conveyor belt (300) is assembled by disposing two modules (100) in adjacent position, in such a way that the first teeth (1) of a first module (100) are aligned and coplanar with the second teeth (2) of a second module (100) in adjacent position relative to the first module.

Successively, the pin (4) is inserted in the holes (10) of the first teeth (1) and in the holes (20) of the adjacent second teeth (2) of the adjacent module, until the plug (T) is disposed between the two walls (30, 31) of the end portion (3) of the module (100).

More precisely, in order for the plug (T) to penetrate the hole (33) of the second wall (31) of the end portion (3) and ensure a firm coupling between the two modules (100), the tabs (5) of the plug (T) are retracted, going from the diverged position to the retracted position, in such a way not to increase the diameter (DT) of the plug (T), freely penetrating the hole (33) of the second wall (31).

After inserting the pin (4), when the plug (T) is completely inserted in the box body, the tabs (5) are released, assuming the diverged position in such a way not to remove the pin (4) from the box body of the end portion (3) of the module (100).

After the preceding description, the advantages of the present invention are manifest because the configuration of the end portion (3) of each module of the conveyor belt (300) makes it possible to replace or maintain one or more of said modules (100) at any time.

Several equivalent variations and modifications, which are within the reach of an expert of the field and fall in any case within the scope of the invention as disclosed by the appended claims, can be made to the present embodiment of the invention.

## Claims

1. Assembly (200) comprising a module (100) for a conveyor belt (300), said module (100) comprising:
- first identical teeth (1) in adjacent position; each first tooth (1) comprising a hole (10); all the holes (10) of said first teeth (1) being coaxially aligned along a longitudinal axis (Y1);
- second identical teeth (2) in adjacent position; each second tooth (2) comprising a hole (20); all the holes of said second teeth (2) being coaxially aligned along a longitudinal axis (Y2) parallel to the longitudinal axis (Y1) of the holes (10) of said first teeth (1); said second teeth (2) being coplanar, opposite and staggered relative to said first teeth (1); and
- an end portion (3) comprising a first wall (30) disposed in proximal position relative to the first and the second teeth (1, 2), and a second wall (31) parallel to said first wall (30) and disposed in distal position relative to said first and second teeth (1, 2); said first wall (30) comprising a hole (32) and said second wall (31) comprising a hole (33); said hole (32) of the first wall (30) and said hole (33) of the second wall (31) being coaxial one to another, as well as coaxial to the holes (20) of the second teeth (2); said hole (32) of the first wall (30) having a lower diameter (d) than the diameter (D) of the hole (33) of the second wall (31);
said assembly (200) comprising a pin (4) inserted in the hole (32) of the first wall (30) and in the holes (10) of the second teeth (2); **characterized in that**,
said pin (4) comprises
one end (40) provided with a plug (T); said plug (T) being disposed between the first wall and the second wall (30, 31); said assembly (200) comprises reversible locking means (M) disposed on said plug (T); said plug (T) having a larger diameter (DT) than the hole (32) of the first wall (30) and a lower diameter than the hole (33) of the second wall (31); said reversible locking means (M) being configured in such a way to be in a contracted position, wherein said reversible locking means (M) do not increase the diameter (DT) of the plug (T), and in a diverged position, wherein said reversible locking means (M) increase the diameter (DT) of the plug (T).

2. The assembly (200) of claim 1, wherein said reversible locking means (M) comprise at least one elastically flexible tab (5) obtained on said plug (T).

3. The assembly (200) of claim 1 or 2, wherein said reversible locking means (M) comprise two elastically flexible tabs (5) obtained on said plug (T); said tabs (5) being disposed in diametrically opposite positions relative to said plug (T).

4. The assembly (200) of any one of the preceding claims, wherein said end portion (3) comprises two lateral walls (34, 35) in parallel position and connected to said first and second wall (30, 31); said lateral walls (34, 35) and said first and second wall (30, 31) defining a box body.

5. The assembly (200) of any one of the preceding claims, wherein said plug (T) comprises a housing (S); said end (40) of said pin (4) being coupled with said housing (S) of said plug (T).

6. The assembly (200) of any one of claims 1 to 4, wherein said plug (T) is obtained in one piece with said end (40) of said pin (4).

7. Modular conveyor belt (300) comprising at least two assemblies (200) disposed in adjacent position according to any one of claims 1 to 6, wherein the pin (4) of an assembly (200) is inserted:
- in the hole (32) of the first wall (30) of the end portion (3) of a module (100);
- in the holes (20) of the second teeth (2) of the same module (100);
- in the holes (10) of the first teeth (1) of an adjacent module (100)

## Patentansprüche

1. Baugruppe (200), umfassend ein Modul (100) für ein Förderband (300), wobei das Modul (100) umfasst:
- erste, identische Zähne (1) in benachbarter Position; wobei jeder erste Zahn (1) ein Loch (10) umfasst; wobei alle Löcher (10) der ersten Zähne (1) entlang einer Längsachse (Y1) koaxial ausgerichtet sind;
- zweite, identische Zähne (2) in benachbarter Position; wobei jeder zweite Zahn (2) ein Loch (20) umfasst; wobei alle Löcher der zweiten Zähne (2) entlang einer Längsachse (Y2) koaxial ausgerichtet sind, die parallel zur Längsachse (Y1) der Löcher (10) der ersten Zähne (1) verläuft; wobei die zweiten Zähne (2) koplanar, gegenüberliegend und versetzt relativ zu den ersten Zähnen (1) sind; und
- einen Endabschnitt (3), umfassend eine erste Wand (30), die in proximaler Position relativ zu den ersten und den zweiten Zähnen (1, 2) angeordnet ist, und eine zweite Wand (31), die parallel zu der ersten Wand (30) und in distaler Position relativ zu den ersten und zweiten Zähnen (1, 2) angeordnet ist; wobei die erste Wand (30) ein Loch (32) umfasst und die zweite Wand (31) ein Loch (33) umfasst; wobei das Loch (32) der ersten Wand (30) und das Loch (33) der zweiten Wand (31) koaxial zueinander sowie koaxial zu den Löchern (20) der zweiten Zähne (2) sind; wobei das Loch (32) der ersten Wand (30) einen kleineren Durchmesser (d) als der Durchmesser (D) des Loches (33) der zweiten Wand (31) aufweist;
wobei die Baugruppe (200) einen Stift (4) umfasst, der in das Loch (32) der ersten Wand (30) und in die Löcher (10) des zweitens Zahns (2) eingesteckt ist;
**dadurch gekennzeichnet, dass**
der Stift (4) einen Endabschnitt (40) umfasst, der mit einem Dübel (T) versehen ist; wobei der Dübel (T) zwischen der ersten Wand und der zweiten Wand (30, 31) angeordnet ist;
die Baugruppe (200) reversible Verriegelungsmittel (M) umfasst, die auf dem Dübel (T) angeordnet sind; wobei der Dübel (T) einen größeren Durchmesser (DT) als das Loch (32) der ersten Wand (30) und einen kleineren Durchmesser als das Loch (33) der zweiten Wand (31) aufweist; wobei die reversiblen Verriegelungsmittel (M) derart konfiguriert sind, dass sie sich in einer zusammengezogenen Position befinden, in der die reversiblen Verriegelungsmittel (M) den Durchmesser (DT) des Dübels (T) nicht vergrößern, und in einer gespreizten Position, in der die reversiblen Verriegelungsmittel (M) den Durchmesser (DT) des Dübels (T) vergrößern.

2. Baugruppe (200) nach Anspruch 1, wobei die reversiblen Verriegelungsmittel (M) mindestens eine elastisch flexible Lasche (5) umfassen, die auf dem Dübel (T) herausgearbeitet ist.

3. Baugruppe (200) nach Anspruch 1 oder 2, wobei die reversiblen Verriegelungsmittel (M) zwei elastisch flexible Laschen (5) umfassen, die auf dem Dübel (T) herausgearbeitet sind; wobei die Laschen (5) in diametral gegenüberliegenden Positionen relativ zu dem Dübel (T) angeordnet sind.

4. Baugruppe (200) nach einem der vorstehenden Ansprüche, wobei der Endabschnitt (3) zwei Seitenwände (34, 35) in paralleler Position umfasst, die mit der ersten und der zweiten Wand (30, 31) verbunden sind; wobei die Seitenwände (34, 35) und die erste und die zweite Wand (30, 31) einen kastenförmigen Körper definieren.

5. Baugruppe (200) nach einem der vorstehenden Ansprüche, wobei der Dübel (T) einen Sitz (S) umfasst; wobei der Endabschnitt (40) des Stifts (4) mit dem Sitz (S) des Dübels (T) gekoppelt ist.

6. Baugruppe (200) nach einem der Ansprüche 1 bis 4, wobei der Dübel (T) einstückig mit dem Endabschnitt (40) des Stifts (4) herausgearbeitet ist.

7. Modulares Förderband (300), umfassend mindestens zwei Baugruppen (200), die in benachbarter Position nach einem der Ansprüche 1 bis 6 angeordnet sind, wobei der Stift (4) einer Baugruppe (200) eingesteckt ist:
- in das Loch (32) der ersten Wand (30) des Endabschnitts (3) eines Moduls (100);
- in die Löcher (20) der zweiten Zähne (2) desselben Moduls (100);
- in die Löcher (10) der ersten Zähne (1) eines benachbarten Moduls (100).

## Revendications

1. Ensemble (200) comprenant un module (100) pour la réalisation d'un tapis transporteur (300), ledit module (100) comprenant :
- des premières dents (1), identiques et juxtaposées entre elles ; chaque première dent (1) comprenant un orifice (10) ; tous les orifices (10) des dites premières dents (1) étant alignés de manière coaxiale le long d'un axe longitudinal (Y1) ;
- des secondes dents (2) identiques et juxtaposées entre elles ; chaque seconde dent (2) comprenant un orifice (20) ; tous les orifices des dites secondes dents (2) étant alignés de manière coaxiale le long d'un axe longitudinal (Y2) parallèle à l'axe longitudinal (Y1) des orifices (10) des dites premières dents (1) ; lesdites secondes dents (2) étant coplanaires, opposées et décalées par rapport aux dites premières dents (1) ; et
- un segment d'extrémité (3) comprenant une première paroi (30) disposée à proximité des premières et des secondes dents (1, 2), et une seconde paroi (31) parallèle à ladite première paroi (30) et disposée en position distale par rapport aux dites premières et secondes dents (1, 2) ; ladite première paroi (30) comprenant un orifice (32) et ladite seconde paroi (31) comprenant un orifice (33) ; ledit orifice (32) de la première paroi (30) et ledit orifice (33) de la seconde paroi (31) étant coaxiaux entre eux et étant coaxiaux par rapport aux orifices (20) des secondes dents (2) ; ledit orifice (32) de la première paroi (30) ayant un diamètre (d) mineur par rapport au diamètre (D) de l'orifice (33) de la seconde paroi (31) ;
ledit ensemble (200) comprenant un axe (4) enfilé à l'intérieur de l'orifice (32) de la première paroi (30) et à l'intérieur des orifices (10) des secondes dents (2) ;
**caractérisé en ce que**
ledit axe (4) comprend une extrémité (40) sur laquelle un tasseau (T) est disposé ; ledit tasseau (T) étant interposé entre la première et la seconde paroi (30, 31) ;
ledit ensemble (200) comprend des moyens de blocage réversibles (M) disposés sur ledit tasseau (T) ; ledit tasseau (T) ayant un diamètre (DT) majeur par rapport à l'orifice (32) de la première paroi (30) et mineur par rapport à l'orifice (33) de la seconde paroi (31) ; lesdits moyens de blocage réversibles (M) étant conformés de manière telle à pouvoir assumer une position rétractée, où lesdits moyens de blocage réversibles (M) n'élargissent pas le diamètre (DT) du tasseau (T), et une position écartée où lesdits moyens de blocage réversibles (M) élargissent le diamètre (DT) du tasseau (T).

2. Ensemble (200) selon la revendication 1, où lesdits moyens de blocage réversibles (M) comprennent au moins une ailette (5), flexible de manière élastique, réalisée sur ledit axe (T).

3. Ensemble (200) selon la revendication 1 ou 2, où lesdits moyens de blocage réversibles (M) comprennent deux ailettes (5), flexibles de manière élastique, réalisées sur ledit tasseau (T) ; lesdites ailettes (5) étant disposées sur des positions diamétralement opposées au dit tasseau (T).

4. Ensemble (200) selon l'une quelconque des revendications précédentes, où ledit segment d'extrémité (3) comprend deux parois latérales (34, 35) parallèles entre elles et reliées à ladite première et à ladite seconde paroi (30, 31) ; lesdites parois latérales (34, 35) et ladite première et ladite seconde paroi (30, 31) définissant un corps en forme de boîte.

5. Ensemble (200) selon l'une quelconque des revendications précédentes, où ledit tasseau (T) comprend un emplacement (S) ; ladite extrémité (40) du dit axe (4) étant couplée avec ledit emplacement (S) du dit tasseau (T).

6. Ensemble (200) selon l'une quelconque des revendications de 1 à 4, où ledit tasseau (T) est réalisé en une seule pièce avec ladite extrémité (40) du dit axe (4).

7. Tapis transporteur (300) modulaire, comprenant au moins deux ensembles (200) adjacents entre eux selon l'une quelconque des revendications de 1 à 6, où l'axe (4) d'un ensemble (200) est enfilé :
- à l'intérieur de l'orifice (32) de la première paroi (30) du segment d'extrémité (3) d'un module (100) ;
- à l'intérieur des orifices (20) des secondes dents (2) du même module (100) ;
- à l'intérieur des orifices (10) des premières dents (1) d'un module (100) adjacent.
